(19) Europäisches Patentamt
European Patent Office
Office européen des brevets

(11) EP 4 653 976 A1

(12) EUROPEAN PATENT APPLICATION

(43) Date of publication:
26.11.2025 Bulletin 2025/48

(21) Application number: 25169343.8

(22) Date of filing: 09.04.2025

(51) International Patent Classification (IPC):
G05D 23/27 (2006.01)     F24D 13/02 (2006.01)
F24D 19/10 (2006.01)     H05B 1/02 (2006.01)

(52) Cooperative Patent Classification (CPC):
H05B 1/0277; F24D 13/02; F24D 19/1096;
G05D 23/27

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 22.05.2024 GB 202407285

(71) Applicant: Herschel Infrared Ltd
Bristol BS11 8AZ (GB)

(72) Inventors:
• MARTIN, Richard
Bristol, BS11 8AZ (GB)
• MOREY, Paul
Bristol, BS11 8AZ (GB)

(74) Representative: Latham, Stuart Alexander
Withers & Rogers LLP
2 London Bridge
London SE1 9RA (GB)

(54) INFRARED SENSOR

(57) An infrared heating system (10) comprising: an infrared heater (12), the infrared heater comprising at least one heating element and an infrared emission surface configured to emit infrared radiation across a heating angle to a heating area; an infrared temperature sensor, the infrared temperature sensor having a field of view defined by a sensor angle, the field of view comprising a portion of the heating area; and a controller configured to: receive a temperature value of the field of view from the infrared temperature sensor; calculate a mean radiant temperature of the heating area based on the temperature value from the field of view; output a control signal corresponding to the mean radiant temperature; and transmit the control signal to a component of the infrared heater, wherein the infrared temperature sensor is outside of the heating area and/or is in the plane of the emission surface

Figure 1a

Figure 1b

EP 4 653 976 A1

## Description

### Field

This invention relates to an infrared heating system including an infrared heater and an infrared temperature sensor, and optionally a motion detector.

### Background

Infrared heaters emit infrared energy to provide radiant warmth to a space without relying on the air within the space to transfer heat between objects. Therefore, infrared heaters can have greater energy transmission efficiency in comparison to conventional electric radiators.

When an area is heated by an infrared heater, it is often desirable to determine the temperature of this heated area to know whether the heater is providing a required temperature. Air temperature sensors are often used to approximate the temperature of a space. However, air temperature sensors have undesirable characteristics as they are influenced by movement of air (which can introduce a reading error) and they don't typically sense radiant temperature. They are therefore unable to give a fully accurate "feels like" (i.e. operative) temperature of the environment. This is particularly impactful in the field of infrared heaters as an infrared heater will provide radiant energy to objects within the space, rather than directly heating the air. Therefore, an air temperature reading relies on the objects within the space reradiating the heat to the air.

It is therefore desirable to monitor the temperature of a space being heated by infrared heaters using other sensor types. However, the present inventors have identified drawbacks of existing temperature sensor systems. There is therefore a need for an improved temperature sensor for use with an infrared heating system.

### Summary

In accordance with a first aspect of the present invention, there is provided an infrared heating system comprising:

> an infrared heater, the infrared heater comprising at least one heating element and an infrared emission surface configured to emit infrared radiation across a heating angle to a heating area;
> an infrared temperature sensor, the infrared temperature sensor having a field of view defined by a sensor angle, the field of view comprising a portion of the heating area; and
> a controller configured to:
>
>> receive a temperature value of the field of view from the infrared temperature sensor;
>> calculate a mean radiant temperature of the heating area based on the temperature value from the field of view;
>> output a control signal corresponding to the mean radiant temperature; and
>> transmit the control signal to a component of the infrared heater, wherein the infrared temperature sensor is outside of the heating area and/or is in the plane of the emission surface.

Therefore, the present invention provides an infrared heater system in which the infrared sensor does not rely on conditions in the immediate area around the sensor and therefore the temperature measurements can be more reliable than existing, known systems. The temperature sensor can for example comprise an infrared thermometer.

For example, radiant sensing in an environment using a "black bulb" sensor is known. The black bulb sensor measures received radiant energy to produce a radiant temperature measurement for exactly the spot in which the sensor is located. However, a black bulb sensor is arranged in the environment being heated and must be pointed towards the heater. Furthermore, a black bulb sensor can only measure the radiant temperature at the sensor location, providing less accurate information on the temperature within the rest of the heated area. This is especially important with infrared heating as temperatures decay away from the centre of the zone being heated.

Therefore, by arranging the infrared temperature sensor outside of the heating area and/or in the plane of the emission surface, the infrared temperature sensor can be either integrated into the infrared heater or housed separately to the infrared heater. The infrared temperature sensor can therefore be closer to the infrared heater than objects within the space being heated. In other words, the infrared temperature sensor is arranged to point outwards from the infrared heater. This is in contrast to a black bulb heater which must be located within the environment being heated, facing the infrared heater.

Thus, the infrared heating system of the present invention is able to measure the average temperature of the area being heated as opposed to only measuring the immediate environment around the sensor and extrapolating this to determine an approximation of the temperature for an entire space. Therefore, accurate information regarding the temperature of the entire area being heated can be determined.

Further advantages of arranging the infrared sensor with a field of view away from the surface of the infrared heater, rather than relying on a separate passive sensor being remote from the heater and physically located within the target heated area are:

- The infrared sensor can detect the average of the infrared temperature of surfaces within the field of view towards which it is pointed (which will be the surfaces opposite the heater). This field of view can align with the optimal heated zone of the heater and therefore provides advantages for increasing the accuracy of "zone heating" infrared heaters in which the temperature of only the area being heated is to be determined.
- The infrared sensor data can be gathered instantly and is not subject to acclimatisation (i.e. warming up in its own time) which is an inevitable result of having a separate unit, such as a black bulb sensor, placed somewhere in the environment to detect either air or radiant temperature or both. Therefore, the time taken for the infrared heater to reach full radiant efficiency when powered (the dynamic factor) can be accurately determined. In turn this "instant" reading is therefore a highly valuable energy saving and optimisation measure.
- The infrared sensor data taken by the infrared temperature sensor is not subject to environmental factors. For example, there will be no convection error due to air blowing over the remote sensor or conduction error due to temperature loss by direct placement of the remote unit against its environment.
- The present invention can, if required, be used with the addition of an air temperature sensor located within the heated zone Therefore, if the user prefers that the measurement is the "operative" temperature of the zone, this is not excluded. In such arrangement, software can be used to calculate the average of the radiant and air temperature readings.

The component of the infrared heater can comprise a control circuit for the at least one heating element, wherein the controller can be further configured to:

receive a target temperature; and
compare the calculated mean radiant temperature to the target temperature, wherein the control signal can be configured to maintain or change the power supplied to the heating element based on the comparison of the calculated mean radiant temperature and the target temperature.

This is advantageous as it provides an infrared heating system with increased accuracy than known infrared heating control systems due to improved sensing of the temperature of the heated area. By using a sensor which can be considered to immediately detect the temperature of the heating area, the efficiency of the feedback loop of the control system can be improved. This can provide a reduction in wasted energy heating an area which is already at the desired temperature. By leveraging the heating capabilities of infrared heaters (zoned heating, radiant, high dynamic factor) and matching the sensor to this capability, the heat output control of the heaters can be improved.

The infrared temperature sensor can comprise a lens and a detector, wherein the lens is arranged to focus infrared thermal radiation on to the detector.

This is advantageous as it provides a sensor which can determine the temperature of objects and be placed in proximity to the infrared emission surface without the temperature data gathered being skewed by convective heat effects.

The field of view of the infrared temperature sensor can not comprise the infrared emission surface.

This arrangement results in the field of view of the temperature sensor being outwards, away from the emission surface. Therefore, the field of view includes objects within the heating zone which radiate infrared radiation but does not include the infrared emission surface itself.

The infrared temperature sensor can be coupled to the infrared emission surface.

This is advantageous as it provides a simple manner of providing the system such that the user is only required to install the infrared heater. It also enables the infrared temperature sensor field of view to have considerable overlap with the infrared emission of the heater.

Placement of the infrared temperature sensor within the emission surface of the heater does not subject the infrared temperature sensor to a sensing error due to proximity to the infrared heat emission source, provided that the thermostat is isolated from heat due to conduction or direct measurement of a radiant surface of the heater. In contrast, an air temperature sensor cannot be located on or within the emission surface of the heater as air temperature sensors are prone to error in temperature readings due to the heat emitted by the heater.

Alternatively, the infrared temperature sensor can be housed in a separate unit and communicate wirelessly to the controller of the heater.

The infrared heating system can further comprise a motion detector arranged to detect motion within the heating area, wherein the motion detector is configured to transmit a detection signal to the controller.

This is advantageous as it provides a signal indicative of human occupancy of a space being heated.

The controller can be further configured to:

receive the detection signal;

output a second control signal corresponding to the detection signal; and

transmit the second output signal to a control circuit for the at least one heating element, wherein the second output signal is configured to increase, decrease or maintain power to the control circuit.

Therefore, the motion detector can provide a signal indictive of whether a human is present in the heating area which can then be used to determine whether to modify the radiant heat emitted by the heater. For example, a reduction of power supplied to the heating elements can occur if the motion detector determines that there is no movement and thus can determine that no humans are present. Additionally or alternatively, the power supplied to the heating elements can increase such that the infrared heater increases the infrared emission levels when motion is detected. Therefore, energy consumption can be optimised by reducing unnecessary heating.

The motion detector can comprise a radar sensor. Therefore, the motion detection capability of a radar sensor is not impacted by the emission of infrared radiation from the heater. Radar based motion detectors are not sensitive to heat and therefore provide an accurate way to determine if there is motion within the heating area.

The motion sensor can be a microwave-based sensor or a radar-based sensor or a combination of both. Both types of sensor are not sensitive to heat but very sensitive to motion, and therefore provide an accurate way to determine occupancy even if there is little or no movement. Therefore, the motion detection capability of the motion sensor is not impacted by the emission of infrared radiation from the heater or very little movement by a room's occupants.

The motion detector can be housed with the infrared temperature sensor. This is advantageous as it increases the likelihood that the field of view of the infrared temperature sensor will have significant overlap with the field of view of the motion detector.

The infrared emission surface can have an operating temperature of 40°C to 200°C. This is advantageous as these operating temperatures encompass low temperature infrared heaters according to IEC 60675.

The infrared emission surface can have an operating temperature of at least 200°C. This is advantageous as these operating temperatures define the lowest temperature for high temperature infrared heaters according to IEC 60675.

The infrared emission surface can have an operating temperature of at least 530°C and can be visibly glowing. This is advantageous as it encompasses visibly glowing infrared heaters of 530°C or above which can be used in cold, spacious indoor spaces or can be used outside.

The infrared emission surface can have an operating temperature of 85°C to 110°C. This is advantageous as these operating temperatures are suitable for use in homes, commercial, and public areas.

In accordance with a second aspect of the present invention, there is provided a method of operating an infrared heating system, the method comprising:

detecting an infrared temperature signal of a heating area using an infrared temperature sensor, wherein the heating area is defined by a heating angle of an infrared heater;

calculating a mean radiant temperature of the heating area based on the infrared temperature signal;

outputting a control signal corresponding to the mean radiant temperature; and

transmitting the control signal to a component of the infrared heater,

wherein the infrared temperature sensor is outside of the heating area and/or is in the plane of the emission surface.

Therefore, the method according to the second aspect provides an improved means of determining the temperature of an area being heated. The method of the invention can constantly match and optimise the output of the heater to enable the average radiant temperature in a target zone to be accurately maintained meaning that unnecessary energy is not expended.

The component of the infrared heater can comprise a control circuit for at least one heating element of the infrared heater, wherein the method can further comprise:

receiving a target temperature; and

comparing the calculated mean radiant temperature to the target temperature, wherein the control signal further comprises a signal to maintain or change the power supplied to the heating element based on the comparison of the calculated mean radiant temperature and the target temperature.

The method of operating an infrared heating system can further comprise:

receiving a detection signal from a motion detector arranged to detect motion within the heating area;

outputting a second control signal corresponding to the detection signal; and

transmitting the second output signal to a control circuit for the at least one heating element, wherein the second output signal increases, decreases or maintains the power supplied to the heating element.

The infrared heater can comprise an infrared emission surface having an operating temperature of 40°C to 200°C, at least 200°C, or at least 530°C.

The field of view of the infrared temperature sensor can be directed towards the heated area.

**Brief Description of the Drawings**

By way of example only, certain embodiments of the invention will now be described by reference to the accompanying drawings, in which:

Figure 1a and 1b are diagrams of exemplary arrangements of the infrared heating system;

Figure 2 is a diagram of part of an exemplary control system for the infrared heating system;

Figures 3a and 3b are diagrams of parts of exemplary control systems for the infrared heating system;

Figure 4 is a schematic demonstrating the heat emission of a typical infrared heater and an exemplary field of view of the temperature sensor; and

Figure 5 is a diagram of an exemplary method of operating the infrared heating system.

**Detailed Description**

Radiant infrared panel heaters primarily emit radiant heat to people and objects. These are capable of correcting the inadequacies of convection-based heating by increasing the mean radiant temperature of an environment and not requiring the air to be warmed up so much. Indeed, studies show that when the Mean Radiant Temperature (MRT) of a room reaches approximately 17°C, occupants typically feel comfortable at an air temperature of 19°C, allowing an overall reduction in air temperature by 1-2°C from the generally accepted norm of 21°C, while maintaining human comfort, potentially saving 10-12% in energy compared to convection heaters.

The class of heaters able to do this is defined by International Standards (IEC60675) as "Low Temperature Infrared Heaters" and must possess the following qualities:

- The heating surface must maintain a temperature between 40° C and 200° C.
- A measured Radiant Efficiency of no less than 40% (indicating the proportion of total power that is radiant rather than convective or conductive).
- To be sufficiently "Radiant" the principal heating surface must exhibit a temperature rise of greater than 75° C.

Most such infrared heaters typically operate with a surface temperature between 85-110°C, which emits a comfortable wavelength of far-infrared heat at around 5-6 microns and a power level of roughly 1kW/m$^2$. At this surface temperature, people within 2-3 meters of the panel experience pleasant warmth, with radiant heat benefits extending up to 4 meters. Higher surface temperatures within homes can be uncomfortably intense, while lower temperatures reduce radiant efficiency. Higher surface temperature panels are more appropriate for installation on ceilings in dwellings with relatively high ceilings where the occupants will be further away from the panels.

Infrared heaters can also operate at temperatures over 200°C. At this point, the heater is classed as a "High Temperature Infrared Heater" defined by International Standards (IEC60675). Infrared heaters can also operate at temperatures over 530°C. At this point, the heater will visibly glow. Such heaters are therefore more appropriate for use in large indoor spaces and/or outside.

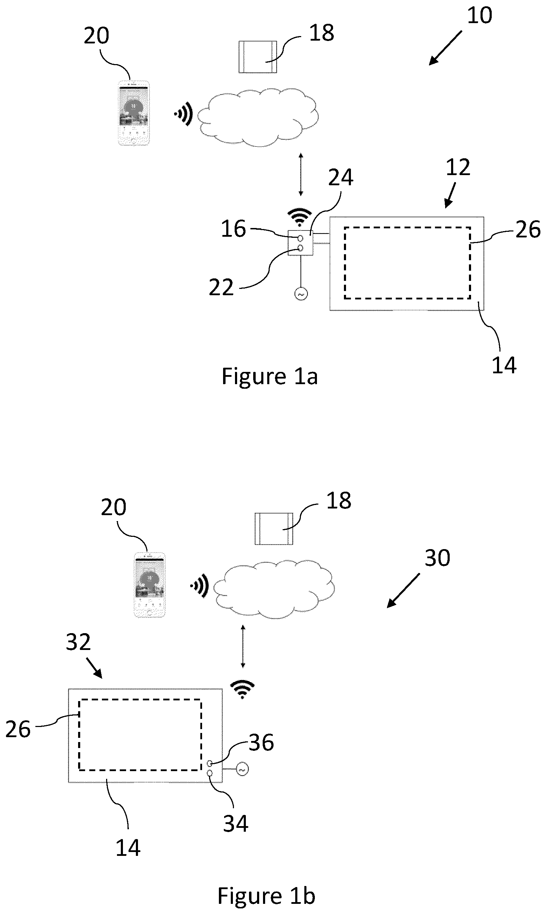

Figure 1a shows an infrared heating system 10 comprising an infrared heater 12. The infrared heater 12 comprises an infrared emission surface 14 arranged to emit infrared radiation. The infrared heater 12 further comprises at least one heating element 26. The heating element 26 can be configured to generate heat which in turn results in the emission of infrared radiation from the emission surface 14. The infrared heating panel can have a plurality of heating elements 26. The infrared heater 12 can be powered by any known power source, for example an AC main supply.

The infrared heating system 10 further comprises an infrared temperature sensor 16. The infrared temperature sensor 16 can be arranged in housing 24 separate to the infrared heater 12. The infrared temperature sensor 16 can comprise a lens and a detector. The lens can be arranged to focus infrared radiation onto the detector resulting in determination of the average temperature within the field of view of the sensor 16. For example, the detector can convert the radiant power received into an electrical signal which can then be used by a control system to generate a temperature value.

The infrared heating system 10 further comprises a controller 18. The controller 18 can be connected to the infrared heater 12 and infrared temperature sensor 16 via a wireless connection, as shown in Figure 1a. For example, a wireless device (such as a WiFi device) coupled to the housing 24 can be configured to connect to the controller 18 via a local network. The local network can further provide connectivity to user equipment 20. The user equipment 20 can be used to operate the infrared heating system 10. Alternatively, the infrared heater 12, infrared temperature sensor 16, controller 18, and/or user equipment 20 can be connected via a wired connection.

The infrared heating system 10 can further comprise a motion detector 22. The motion detector 22 can be arranged within the housing 24. The motion detector 22 can be a radar sensor, such as a microwave radar sensor. The motion detector 22 can detect the presence of movement within a field of view. Similarly to the infrared temperature detector 16, the motion detector 22 can be connected to the infrared heating system 10 via a wired or wireless connection.

Therefore, data gathered by the infrared temperature sensor 16 and/or motion detector 22 can be transmitted to the controller 18.

Figure 1b shows an infrared heating system 30 with similar features to that of the infrared heating system 10 shown in Figure 1a. Therefore, for the sake of brevity, only the differences will be described.

The infrared heating system 30 comprises an infrared heater 32. Similarly to the infrared heater 12, the infrared heater 32 comprises an infrared emission surface 14 arranged to emit infrared radiation and at least one heating element 26. The infrared heating system 30 comprises an infrared temperature sensor 36. The infrared temperature sensor 36 can be arranged on or within the infrared heater 32, for example, on or within the infrared emission surface 14. The infrared temperature sensor 36 can be substantially similar to the infrared temperature sensor 16 shown in Figure 1a.

The infrared heater 32 can further comprise a motion detector 34. The motion detector 34 can be arranged on or within the infrared heater 32, for example, on or within the infrared emission surface 14. All other features of the motion detector 34 can be the same as the motion detector 22 shown in Figure 1a.

The infrared temperature sensor 36 and/or the motion detector 34 can be configured to connect to the controller 18 via a wired or wireless connection means as described in relation to Figure 1a. Therefore, the temperature sensor 36 and/or the motion detector 34 can be configured to transmit data to the controller 18.

The infrared temperature sensors 16, 36 of Figures 1a and 1b, respectively can be arranged such that they have a field of view which extends away from the surface of the infrared heater 12, 32. In other words, the temperature sensors can be considered to "face outwards" to view the heating area from the surface of the infrared heater.

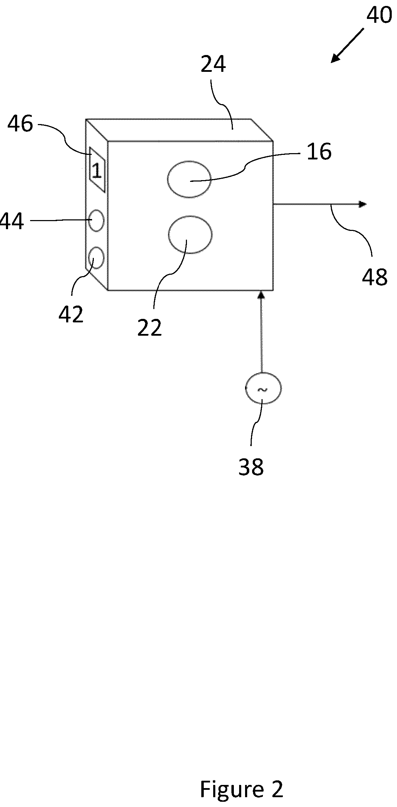

Figure 2 shows a portion of an exemplary control system 40 for use with the infrared heating system 10, 30. The control system 40 can be included in the housing 24 which supports the infrared temperature sensor 16, as shown in Figure 2. In this arrangement, the control system 40 is physically separate to the infrared heater 12 but is connected via a wired or wireless connection. Alternatively, the control system 40 can be incorporated into the infrared heater. In such arrangement, the housing 24 can be located in the infrared heater 32 such that the temperature sensor and/or motion detector are on or within the infrared heater 32 as shown in Figure 1b.

The control system 40 can include a power source 38, such as an AC mains supply. The control system 40 can further comprise a power button 42, a function button 44, and/or a display 46. The power button 42 can enable connection to the power supply 38 and can isolate the infrared heating system from the power supply. The function button 44 can enable a user to interact with the control system 40 to carry out functions such as pair the infrared heater with a local network and application software and/or adjust a level setting of the heater. These functions can be facilitated through varying duration and/or frequency of user contact with the button 44. The display 46 can provide a visual indication of the state of operation of the infrared heater, for example, whether the connectivity system is operational, whether the infrared heater is on, off, or in a standby mode, the level of heating selected, and/or the measured temperature.

The control system 40 can include a power connection 48 to the infrared heater 12, 32 so that power can be supplied to the infrared heater from the power source 38.

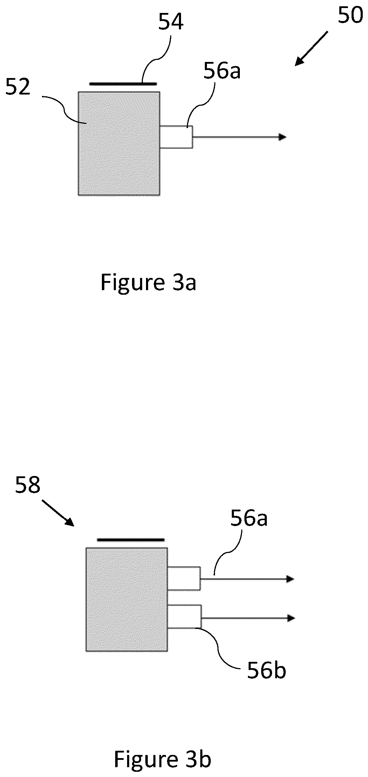

Figure 3a shows a portion of an exemplary control system 50 which can be internal to the infrared heater 12, 32. The control system 50 can comprise a printed circuit board (PCB) 52 configured to receive an input from the infrared temperature sensor 16, 36 and optionally, the motion detector 22, 34. The control system 50 can further comprise a means of wired or wireless connection to the controller 18. For example, the control system can comprise a WiFi aerial 54. The PCB 52 can be configured to transmit, via the connection means, the sensor data to the controller 18. The PCB 52 can be configured to receive, via the connection means, a control signal from the controller 18. The control signal can be a heating command which maintains or changes the operation of the infrared heater 12, 32 by maintaining or varying the power supplied 48 to the heater. The control signal can alternatively or additionally comprise information for visual representation on the display 46.

For infrared heaters 12, 32 having a single heating element, a single relay 56a handling power output to the heater can be provided. This output 56a can power the single heating element and can turn the heating element on or off, based on the control signal received from the controller 18.

Figure 3b shows a portion of an exemplary control system 58 which is substantially similar to that shown in Figure 3b and therefore, for brevity, only the differences will be described. The control system 58 comprises an additional relay 56b handling power output to an additional heating element of the infrared heater. The outputs 56a, 56b can power the plurality of heating elements individually by turning each heating element on or off, based on the control signal received form the controller 18. This can enable the infrared heater to provide different power modes.

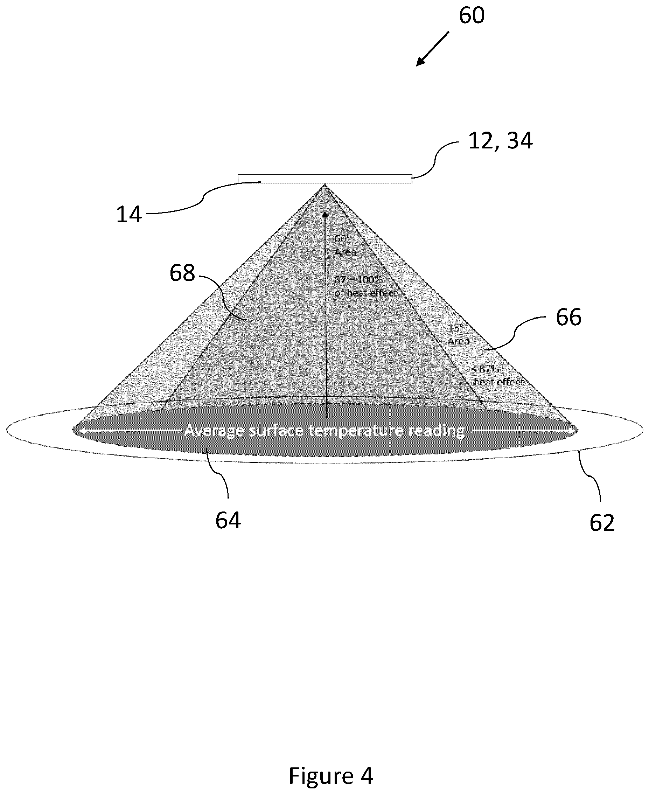

Figure 4 shows a schematic 60 of a low temperature infrared heater 12, 34 arranged to emit infrared radiation from an emission surface 14.

Typically, infrared heating works via the direct transmission of heat energy from a source (the heater) to a target (the heated area) without having to directly heat the air in between. The emissivity of the infrared heat decays according to distance travelled from the front of the heater as well as to the sides. In this way the heater demonstrates an effective "cone of heat" in front of the heater 12, 32 which extends out a certain distance to the side of the heater. This "cone of heat" can be defined by a heating angle. The surface temperature of the heater becomes a comfortable perceived heat intensity at the optimal distance away from the emission surface.

The "cone of heat" from a heater can be calculated for said heater using the angle of heat emission and the distance of the heater from the target. This enables the size of the heated area to be calculated.

The heated area can be determined for high temperature infrared heaters (those having a surface temperature above 200°C) accurately because of the angle of the reflectors or the shape of the emission surface of the heater define a specific angle of emission of the heater. Because the angle of emission does not change, the heated area itself will widen the further away the heater is from the zone, however the intensity of the heat will lessen. In this way the performance of the heater and the distance of the heater from the target heated area can be matched with the size of zone it is required to heat.

Low temperature infrared heaters (those having a surface temperature between 40 - 200°C) are typically flat radiating surfaces and do not have reflectors or other devices to focus the heat into a defined cone. However, the heated area can nonetheless be determined by considering the general angle of effective emission from the heater surface. The emission is 100% effective directly in front of the heater and decays gradually as the angle from the perpendicular of the emission surface increases, according to Lambert's Cosine Law. Therefore, a low temperature heater will exhibit 87% emission efficiency at 30° from perpendicular and 50% emission efficiency at 60° from perpendicular. The effectiveness of low temperature infrared panels is generally considered therefore to be 60° either side of perpendicular or at a 120° arc emanating from the heater surface. As shown in Figure 4, the emission efficiency in the area 68 defined by a heating angle between 0° and 30° from perpendicular is between 100% and 87%. The area 66 defined by a heating angle beyond 30° from perpendicular will exhibit an emission efficiency of less than 87%.

In both high and low temperature infrared heaters, the heated area can be predicted mathematically according to the distance from the heater using the following equation:

$$\text{Heated Area} = (4 \times Pi \times r^2) / (360/\text{heating angle})$$

Where "r" = radius, which is the distance from the heater to its target.

Therefore, as an example, a heater with an effective heat angle of 90° and located 2 meters from a target could provide heat to an area:

$$A = (4 \times 3.14 \times 2^2) / (360/90)$$

$$A = 12.56 \ m^2$$

Therefore, the heated area and the distance of the heater from the target can be calculated and adjusted. The other variable to consider is the intensity of the heat in the area, which is the wattage of the heater divided by the heated area to give a value of watts per metres squared. This value translates into a comfort temperature that humans can expect to feel in that heated area. The actual wattage of the heater can then be specified to match the requirements.

The above calculations inform the radiant requirements of the infrared heaters. Therefore, providing an infrared heater with an infrared temperature sensor which can measure the average temperature across the heating area can provide a means to optimise the parameters of the heater. This is achieved by matching the heating area 62 to the field of view 64 of the infrared temperature sensor. The field of view of the temperature sensor is a known angle. For example, typical infrared temperature sensors have a field of view which spans an angle of 90° from the sensor. The infrared temperature sensor can average the reading from the area within its field of view meaning it will return a mean radiant temperature from the target area, rather than being skewed particularly by the presence of a hot object (e.g. a person) within it. Moreover, the target area is a known dimension and therefore can be set to match the specification of the heater.

A sensor with a field of view of 90° can monitor the output of an infrared heater regardless of its effective heating angle, so long as that heating angle is known so that estimates can be made accurately. For high temperature infrared heaters, the heating angle is typically 90° or less. Therefore, a sensor with a 90° field of view will capture the full heating area. For a low temperature infrared heater, where the effective heating angle is considered generally to be 120°, a sensor with a field of view of 90° is also adequate. This is because a 90° sensor will view the central 60° arc of the heated area where the heater is 87 - 100% effective and only 30° of the sensing arc (i.e., 15° either side of the central 60° arc 66) will return lower temperatures where the effectiveness of the heater is below 87%. Therefore, the resulting temperature reading of the area will be "centre weighted". This is advantageous as a radiant heater heats the surfaces it is pointed at, but the overall reading from the sensor will be averaged across the heating area.

For more intense heaters (for example, very high temperature, glowing, industrial type applications) an infrared temperature sensor with a field of view of approximately 70° can be used.

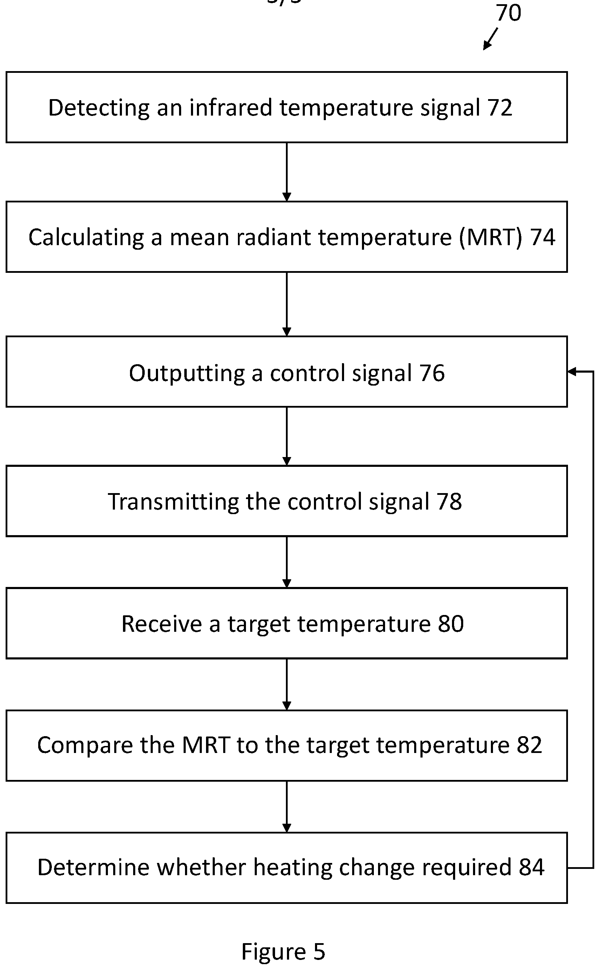

Figure 5 shows an exemplary method 70 of operating the infrared heating system 10, 30.

At step 72, the method 70 comprises detecting the infrared temperature signal of a heating area using an infrared temperature sensor, wherein the heating area is defined by a heating angle of an infrared heater as described in relation to Figure 4.

When a low temperature heater is radiating infrared radiation, a heating area will form according to the schematic shown in Figure 4. For high temperature heaters, a heating area will form based on the shape of the emission surface and any reflectors present. Therefore, in both types of heaters, the heating area size and placement can be calculated.

As the infrared temperature sensor is arranged outside of the heating area and/or is in the plane of the emission surface, the field of view of the temperature sensor can be arranged to overlap the heating area. By calculating the heating area and area defined by the field of view, the two areas can be aligned. This means that the infrared temperature sensor can have a field of view which substantially matches the area of the heated zone. Therefore, the average temperature detected by the infrared temperature sensor will be accurate to the specific heating area and not skewed by non-heated areas. The temperature sensor can be the sensor described in Figures 1a or 1b.

At step 74, the method 70 comprises calculating a mean radiant temperature (MRT) of the heating area based on the infrared temperature signal.

Therefore, an average temperature in the relevant heating area can be calculated. The temperature value detected by the infrared temperature sensor will provide a value of the mean radiant temperature in an area. The controller can further receive the angle of the field of view of the temperature sensor and/or the heating angle of the heater. This data can be considered when calculating the mean radiant temperature. For example, the controller can determine that the heating area and field of view of the sensor are of non-equal areas and therefore the calculation requires adaptation to account for any misalignment of the field of view and heating angle.

At step 76, the method 70 comprises outputting a control signal corresponding to the MRT. This can be done from the controller described in Figures 1a and 1b.

At step 78, the method 70 comprises transmitting the control signal to a component of the infrared heater. Once outputted at step 76, the control signal can be transmitted to a component of the infrared heater. The component can be the control circuit 50, 58 described in relation to Figures 3a and 3b and/or other components of the heater, such as the display 46.

Optionally, at step 80, the method 70 can further comprise receiving a target temperature.

The target temperature can be selected by a user and can be the temperature which a user intends to heat an area to. For example, the user can wish to maintain a space at 20°C. This can be input into the infrared heating system via the user equipment 20 described in relation to Figures 1a and 1b. The user input can be transmitted to the controller such that the target temperature is received at the controller.

At step 82, the method 70 can further comprise comparing the calculated MRT to the target temperature.

The method 70 can further include determining 84 whether the measured MRT is below, above or at an acceptable threshold temperature and thus whether a change to the heating level is required and what any change required is.

Therefore, the method 70 can further comprise a feedback loop in which the determination is included in the control signal output at step 76. In turn, this can result in the transmission of the output signal at step 78 including a signal to increase, decrease, or maintain the power supplied to the heating element(s) based on the comparison of the calculated mean radiant temperature and the target temperature.

For example, the control signal can comprise a signal indicative of the heating area being below the target temperature and thus heating is still required. In turn, the control signal can be transmitted from the controller to the control circuit which can operate the heating elements. Alternatively, the control signal can comprise a signal indicative of the heating area being at or above the target temperature and thus the present level of heating is no longer required. Again, the control signal can be transmitted from the controller to the control circuit which can operate the heating elements.

Therefore, the controller can calculate and facilitate required operational corrections to be transmitted to the heater which can increase, maintain, or reduce the temperature of the heated area.

The method 70 can additionally comprise receiving a detection signal from a motion detector arranged to detect motion within the heating area. For example, the motion detector described in Figures 1a and 1b can be suitable.

The method 70 can further comprise outputting a second control signal corresponding to the detection signal.

The method 70 can further comprise transmitting the second output signal to a control circuit for the at least one heating element, wherein the second output signal maintains or changes the power supplied to the heating element.

In one example, a motion detection can allow the general level of heating to be set, for example, a degree or two lower, when no motion is detected. The system can be configured such that when motion (which can be indicative of human presence) is detected, the power level can be increased while motion continues to be detected. This system can therefore reduce energy consumption for frequently unoccupied areas which do not require constant heating. It can also provide an automated switch off system for unoccupied spaces. For example, if no motion is detected for a set period of time, the system can determine that users have left the space and the heater should be fully switched off.

In a specific example, an infrared heating system can be implemented in an infrequently occupied area, such as a bathroom. As it is not efficient to continuously provide heat to an unoccupied bathroom, the target temperature for an unoccupied state can be set lower than the target temperature for an occupied state. When motion is detected, for example by a user entering the bathroom, the heater can increase the amount of radiant energy being emitted until the occupied state target temperature is met. Once motion is no longer detected, the heater can reduce the amount of radiant energy being emitted as determined by the unoccupied state target temperature.

This arrangement is particularly useful for commercial environments such warehouses and factories as well as home environments.

The motion detector can be configurable so that it can be enabled or disabled and the period of time in which the heater can switch off when presence is no longer detected can be selected by the user. The sensing distance of the motion detector can also be configured to suit the requirements of each location.

The disclosed infrared heating system and method of operation is suitable for use in enclosed spaces which require indoor heating such as rooms within a home as well as commercial spaces and outdoor areas.

In enclosed environments with low airflow (for example, a household or similar), air temperature will approximately follow radiant temperature increases and never exceed it. Therefore, it is appropriate to manage to the radiant target temperature. In more open environments (for example, a church, a railway station concourse, or an outside restaurant terrace) where air temperature is much more of an influencing factor (either due to presence of airflow or the overall zone being much larger than the target heated area and therefore always trying to chill it) the bias towards adjusting heat output via the radiant temperature of the sensing zone is still the most accurate and stable metric. This is because the local thermal mass is likely to still be the most accurate and stable indicator of temperature within the zone. In contrast, air temperature measurements can be unstable, inaccurate, and uncontrollable due to air passing through the air temperature sensor.

The following information provides sample software configuration and logic for operating an infrared heating system according to the invention.

For a single element heater in which the heater is fully ON or fully OFF, the configuration and logic can be:

```
Constants:

    Setpoint = Desired target temperature
    Setback = Lower temperature when room is unoccupied

Variables:

    Actual = Current temperature reading
    Presence = Boolean (True/False) function indicating presence in the room
    Heater = Boolean (On/Off) function indicating heater status

Initialization:

    Heater = Off
    Presence = False

Main Loop:
Loop Forever:

    Read Actual temperature
    Read Presence status
```

```
If Presence is True:
        If Actual < Setpoint:
            Turn Heater On
        Else:
            Turn Heater Off
    Else (If Presence is False):
        If Actual < Setback:
            Turn Heater On
        Else:
            Turn Heater Off
```

For heaters with multiple power levels where the heating can be set to adjust automatically between power levels according to motion indicative of presence and a required (setpoint) temperature, the configuration and logic can be:

Constants:

Setpoint = Desired target temperature
Setback = Lower temperature when room is unoccupied
Hysteresis_Coarse = Coarse temperature hysteresis threshold
Hysteresis_Fine = Fine temperature hysteresis threshold

Variables:

Actual = Current temperature reading
Presence = Boolean (True/False) function indicating presence in the room
Heater_Power = Power level of the heater (Level 1, Level 2, Full Power)
Heater_Status = Boolean (On/Off) function indicating heater status

Initialization:

Heater_Status = Off
Presence = False

Main Loop:
Loop Forever:

Read Actual temperature
Read Presence status

If Presence is True:

    While Actual < (Setpoint:
If Actual <= (Setpoint - Hysteresis_Coarse):
        If Heater_Power < Full Power:
            Increase Heater_Power to Full Power
        Continue until Actual = (Setpoint – Hysteresis_Fine)
        When Actual = (Setpoint – Hysteresis_Fine):
            If Heater_Power = Full Power:
                Decrease Heater_Power to Level 2
            Continue until Actual = Setpoint OR Actual = (Setpoint – Hysteresis_Coarse)

If Actual = (Setpoint):

Decrease Heater_Power to Level 1

Continue until Actual = (Setpoint + Hysteresis_fine) OR Actual = (Setpoint – Hysteresis_Fine)

If Actual = (Setpoint + Hysteresis_Fine):

Heater Status = OFF

Else (if Presence is False):

If Actual < (Setback - Hysteresis_Coarse):

If Heater_Power < Full Power:

Set Heater_Power to Full Power

Else if Actual <= (Setback – Hysteresis Fine):

Decrease Heater_Power to Level 2

Else:

If Actual = (Setback):

Decrease Heater_Power to Level 1

If Actual = (Setback+Hysteresis Fine)

Heater_Status = OFF

Although the invention has been described above with reference to one or more preferred embodiments, it will be appreciated that various changes or modifications can be made without departing from the scope of the invention as defined in the appended claims. The word "comprising" can mean "including" or "consisting of" and therefore does not exclude the presence of elements or steps other than those listed in any claim or the specification as a whole. The mere fact that certain measures are recited in mutually different dependent claims does not indicate that a combination of these measures cannot be used to advantage.

**Claims**

1.  An infrared heating system comprising:

    an infrared heater, the infrared heater comprising at least one heating element and an infrared emission surface configured to emit infrared radiation across a heating angle to a heating area;
    an infrared temperature sensor, the infrared temperature sensor having a field of view defined by a sensor angle, the field of view comprising a portion of the heating area; and
    a controller configured to:

    receive a temperature value of the field of view from the infrared temperature sensor;
    calculate a mean radiant temperature of the heating area based on the temperature value from the field of view;
    output a control signal corresponding to the mean radiant temperature; and
    transmit the control signal to a component of the infrared heater,

    wherein the infrared temperature sensor is outside of the heating area and/or integrated into the infrared heater.

2.  The infrared heating system according to claim 1, wherein the component of the infrared heater is a control circuit for the at least one heating element, wherein the controller is further configured to:

receive a target temperature; and
compare the calculated mean radiant temperature to the target temperature, wherein the control signal is configured to maintain or change the power supplied to the heating element based on the comparison of the calculated mean radiant temperature and the target temperature.

3. The infrared heating system according to any preceding claim, wherein the infrared temperature sensor comprises a lens and a detector, wherein the lens is arranged to focus infrared thermal radiation on to the detector.

4. The infrared heating system according to any preceding claim, wherein the field of view of the infrared temperature sensor does not comprise the infrared emission surface.

5. The infrared heating system according to any preceding claim, wherein the infrared temperature sensor is coupled to the infrared emission surface.

6. The infrared heating system according to any preceding claim, further comprising a motion detector arranged to detect motion within the heating area, wherein the motion detector is configured to transmit a detection signal to the controller.

7. The infrared heating system according to claim 6, wherein the controller is further configured to:

receive the detection signal;
output a second control signal corresponding to the detection signal; and
transmit the second output signal to a control circuit for at least one heating element, wherein the second output signal is configured to increase, decrease or maintain power to the control circuit.

8. The infrared heating system according to any of claims 6 or 7, wherein the motion detector is a radar sensor and/or a microwave radiation sensor.

9. The infrared heating system according to any of claims 6 to 8, wherein the motion detector is housed with the infrared temperature sensor.

10. The infrared heating system according to any preceding claim, wherein the infrared emission surface has an operating temperature of 85°C to 110°C.

11. A method of operating an infrared heating system, the method comprising:

detecting an infrared temperature signal of a heating area using an infrared temperature sensor, wherein the heating area is defined by a heating angle of an infrared heater;
calculating a mean radiant temperature of the heating area based on the infrared temperature signal;
outputting a control signal corresponding to the mean radiant temperature; and
transmitting the control signal to a component of the infrared heater,

wherein the infrared temperature sensor is outside of the heating area and/or integrated into the infrared heater.

12. The method of operating an infrared heating system according to claim 11, wherein the component of the infrared heater is a control circuit for at least one heating element of the infrared heater, wherein the method further comprises:

receiving a target temperature; and
comparing the calculated mean radiant temperature to the target temperature, wherein the control signal further comprises a signal to maintain or change the power supplied to the heating element based on the comparison of the calculated mean radiant temperature and the target temperature.

13. The method of operating an infrared heating system according claim 12, the method further comprising:

receiving a detection signal from a motion detector arranged to detect motion within the heating area;
outputting a second control signal corresponding to the detection signal; and
transmitting the second output signal to a control circuit for the at least one heating element, wherein the second output signal increases, decreases, or maintains the power supplied to the heating element.

14. The method of operating an infrared heating system according to any of claims 11 to 13, wherein the infrared heater comprises an infrared emission surface having an operating temperature of 85°C to 110°C.

15. The method of operating an infrared heating system according to any of claims 11 to 14, wherein the field of view of the infrared temperature sensor is directed towards the heated area.

Figure 1a

Figure 1b

Figure 2

54

50

52

56a

Figure 3a

58

56a

56b

Figure 3b

60

12, 34

14

68

60°
Area

87 – 100%
of heat effect

66

15°
Area

< 87%
heat effect

Average surface temperature reading

64

62

Figure 4

70

```
┌─────────────────────────────────────────────────┐
│   Detecting an infrared temperature signal 72    │
└─────────────────────────────────────────────────┘
                        │
                        ▼
┌─────────────────────────────────────────────────┐
│  Calculating a mean radiant temperature (MRT) 74 │
└─────────────────────────────────────────────────┘
                        │
                        ▼
┌─────────────────────────────────────────────────┐
│         Outputting a control signal 76           │◄──┐
└─────────────────────────────────────────────────┘   │
                        │                              │
                        ▼                              │
┌─────────────────────────────────────────────────┐   │
│        Transmitting the control signal 78        │   │
└─────────────────────────────────────────────────┘   │
                        │                              │
                        ▼                              │
┌─────────────────────────────────────────────────┐   │
│          Receive a target temperature 80         │   │
└─────────────────────────────────────────────────┘   │
                        │                              │
                        ▼                              │
┌─────────────────────────────────────────────────┐   │
│   Compare the MRT to the target temperature 82   │   │
└─────────────────────────────────────────────────┘   │
                        │                              │
                        ▼                              │
┌─────────────────────────────────────────────────┐   │
│  Determine whether heating change required 84    │───┘
└─────────────────────────────────────────────────┘
```

Figure 5

Europäisches
Patentamt
European
Patent Office
Office européen
des brevets

# EUROPEAN SEARCH REPORT

**Application Number**

EP 25 16 9343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Efficient Infrared Barn Heaters \| Big Dee's Tack & Vet Supplies", , 30 September 2021 (2021-09-30), XP093293276, Retrieved from the Internet: URL:https://www.bigdweb.com/blog/kalglo-heaters * page 3 * | 1-15 | INV. G05D23/27 F24D13/02 F24D19/10 H05B1/02 |
| A | US 4 671 458 A (FUKUDA NORISUKE [JP] ET AL) 9 June 1987 (1987-06-09) * the whole document * | 1-15 | |
| A | US 2021/208002 A1 (MEGGERS FORREST [US] ET AL) 8 July 2021 (2021-07-08) * the whole document * | 1-15 | |
| A | US 2013/259456 A1 (VISWANATHAN MAHESH [US]) 3 October 2013 (2013-10-03) * the whole document * | 1-15 | TECHNICAL FIELDS SEARCHED (IPC) G05D F24D H05B |

The present search report has been drawn up for all claims

| Place of search | Date of completion of the search | Examiner |
|---|---|---|
| Munich | 14 July 2025 | Etienne, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 9343

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2025

| Patent document cited in search report | | Publication date | Patent family member(s) | | Publication date |
|---|---|---|---|---|---|
| US 4671458 | A | 09-06-1987 | NONE | | |
| US 2021208002 | A1 | 08-07-2021 | CN | 112262300 A | 22-01-2021 |
| | | | EP | 3784999 A1 | 03-03-2021 |
| | | | US | 2021208002 A1 | 08-07-2021 |
| | | | WO | 2019232181 A1 | 05-12-2019 |
| US 2013259456 | A1 | 03-10-2013 | US | 2013259456 A1 | 03-10-2013 |
| | | | US | 2017051926 A1 | 23-02-2017 |
| | | | WO | 2013151908 A1 | 10-10-2013 |

EPO FORM P0459

For more details about this annex : see Official Journal of the European Patent Office, No. 12/82